# EUROPEAN PATENT SPECIFICATION

(11) **EP 2 624 550 B1**
(45) Date of publication and mention of the grant of the patent: **15.04.2020**
(21) Application number: 11828913.1
(22) Date of filing: 22.09.2011
(51) Int. Cl.: H04N 7/173, H04H 20/24, H04N 21/4728, H04N 21/239, H04N 21/6377, H04N 21/4545, H04N 21/44, H04N 21/2343, G11B 27/034, H04H 20/38

(54) **CONTENT TRANSMITTING DEVICE, CONTENT TRANSMITTING METHOD, CONTENT REPRODUCTION DEVICE, CONTENT REPRODUCTION METHOD, PROGRAM, AND CONTENT DELIVERY SYSTEM**
INHALTSÜBERTRAGUNGSVORRICHTUNG, INHALTSÜBERTRAGUNGSVERFAHREN, INHALTSWIEDERGABEVORRICHTUNG, INHALTSWIEDERGABEVERFAHREN UND INHALTSAUSGABESYSTEM
DISPOSITIF DE TRANSMISSION DE CONTENU, PROCÉDÉ DE TRANSMISSION DE CONTENU, DISPOSITIF DE REPRODUCTION DE CONTENU, PROCÉDÉ DE REPRODUCTION DE CONTENU, PROGRAMME ET SYSTÈME DE DISTRIBUTION DE CONTENU

(30) Priority: 01.10.2010 US 388999 P; 05.07.2011 US 201161504568 P
(43) Date of publication of application: 07.08.2013
(73) Proprietor: Saturn Licensing LLC, New York, NY 10022-3211 (US)
(72) Inventor: KITAZATO, Naohisa, Tokyo 108-0075 (JP)
(74) Representative: Witte, Weller & Partner Patentanwälte mbB
(86) International application number: PCT/JP2011/071569
(87) International publication number: WO 2012/043356

(56) References cited:
- JP-A- 2003 018 583
- JP-A- 2007 251 887
- US-A1- 2008 079 754
- US-A1- 2009 300 692
- US-A1- 2009 320 081

## Description

The present disclosure relates to a content transmission apparatus, a content transmission method, a content reproduction apparatus, a content reproduction method, a program, and a content distribution system, and more particularly, to a content transmission apparatus, a content transmission method, a content reproduction apparatus, a content reproduction method, a program, and a content distribution system that are configured to allow a user to view content in any desired image frame of the content reproduction apparatus.

With related-art video content distribution services typified by television broadcasting and video-on-demand systems supported by the Internet, for example, viewers are able to view video content only in image frames produced by the broadcasting side.

It should be noted that the video content based on package media such as DVD (Digital Versatile Disc) and BD (Blu-ray Disc) includes those in which a sport event or a concert hall taken from two or more different angles (so-called multi-angles) is recorded (refer to PTL 1 for example).

In the reproduction of multi-angle video content, the viewer is able to select any one of videos included in this content and view the selected video. It should be noted however that, even in the case of multi-angle video content, the viewer is not able to view a video in any desired image frame, namely, a video taken in any desired angle.

### [Citation List]

### [Patent Literature]

[PTL 1]
JP 2009-135946A

US 2008/0079754 A1 discloses a content providing method, a program of a content providing method, a recording medium on which a program of a content providing method is recorded, and a content providing apparatus. The content providing method includes the steps of: outputting moving image data of video contents; selecting moving image data in a partial area from the moving image data of the video contents, and outputting zoomed-in moving image data; thinning out frames and pixels of the moving image data of the video contents except at least the partial area, and outputting moving image data slightly zoomed-out; and outputting the zoomed-in moving image data and the moving image data slightly zoomed-out.

US 2009/0320081 A1 discloses a method to provided videos from a video data source comprising a sequence of multi-level video frames. Each multi-level frame comprises multiple copies of a respective frame. Each copy has an associated video resolution or quality level that is a member of a predefined range of levels that range from a highest level lowest level. First video data corresponding to a first portion of a first copy of a respective frame and second video data corresponding to a second portion of a second copy of the respective frame are extracted from the video data source. The video resolution or quality level of the second copy is distinct from that of the first copy.

### [Summary]

### [Technical Problem]

It should be noted here that it is desired for video content to have viewing forms in which a viewer not only selects a video having a broadcast image frame or a prepared multi-angle video but also is able to view videos with any desired image frames. To be more specific, with sport event video content for example, there are demands that a viewer wants to view with only a particular athlete focused or, in concert hall video content for example, a viewer wants to view with only the right side of the stage focused.

In view of the above-identified circumstances, the present disclosure is intended to allow a user to view video content with any desired image frames.

### [Solution to Problem]

According to a first aspect of the present disclosure there is provided a content transmission apparatus according to claim 1

Further, according to the first aspect of the present disclosure there is also provided a content transmission method according to claim 5.

In the first aspect of the present disclosure, image frame information is received from the content reproduction apparatus, a clipping range is computed on the basis of the received image frame information, the computed clipping range is clipped from the held high-resolution video content, and given-image-frame content made up of the clipping result is transmitted to the content reproduction apparatus.

According to a second aspect of the present disclosure there is provided a content reproduction apparatus according to claim 7.

Further, according to the second aspect there is provided a content reproduction method according to claim 11.

Finally, according to a third aspect of the present disclosure there is provided a content distribution system according to claim 13.

In the third aspect of the present disclosure, image frame information transmitted from the content reproduction apparatus is received by the content transmission apparatus. On the basis of the received image frame information, a clipping range is computed. Given-image-frame content made up of the clipping result is transmitted to the content reproduction apparatus. In addition, by the content reproduction apparatus, an operation done by the user for specifying a given clipping range on the screen of video content is entered. On the basis of the entered operation, the image frame information is generated. The generated image frame information is transmitted to the content transmission apparatus. In accordance with the transmitted image frame information, the given-image-frame content is received.

### [Advantageous Effects of Invention]

According to the first aspect of the present disclosure, video content can be transmitted in an image frame required by the receiving side.

According to the second aspect of the present disclosure, given-image-frame content with a given image frame clipped from video content can be received for reproduction. According to the third aspect of the present disclosure, given-image-frame content with an image frame clipped form video content can be provided for viewers.

### [Brief Description of Drawings]

FIG. 1 is a block diagram illustrating an exemplary configuration of a content distribution system practiced as one embodiment of the present disclosure.
FIG. 2 is a diagram illustrating a relation between an image frame to be taken and an image frame to be supplied to the receiving side.
FIG. 3 is a block diagram illustrating an exemplary configuration of a content distribution server.
FIG. 4 is a block diagram illustrating an exemplary configuration of a content reproduction terminal.

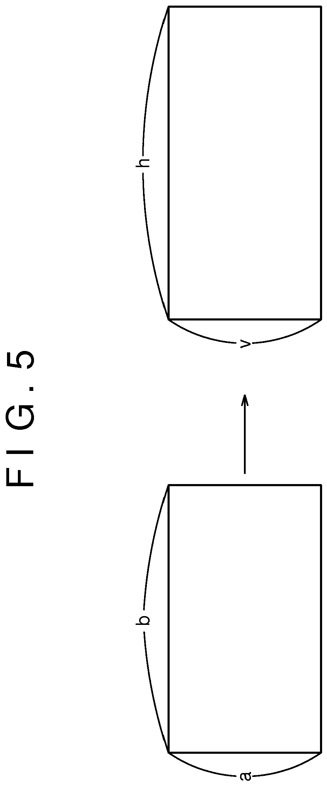

FIG. 5 is a diagram illustrating image frames and resolution conversion in the content reproduction terminal.
FIG. 6 shows description examples of a request from the content reproduction terminal and a response by HTTP to this request.
FIG. 7 shows description examples of request from the content reproduction terminal and a response by RTSP/RTP to this request.
FIG. 8 is a flowchart indicative of an operation of a content distribution system.
FIG. 9 is a block diagram illustrating an exemplary configuration of a computer.

### [Description of Embodiments]

The present disclosure will be described in further detail by way of best modes (hereafter referred to embodiments) thereof with reference to the accompanying drawings.

### [Embodiment 1]

### [Exemplary configuration of a content distribution system]

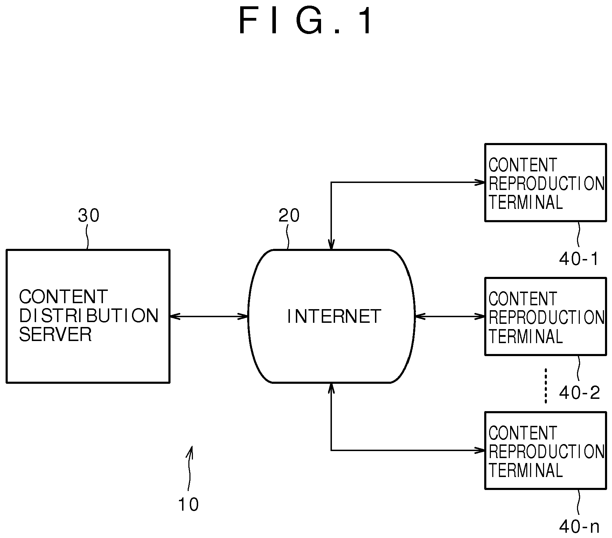

FIG. 1 shows an exemplary configuration of a content distribution system practiced as one embodiment of the present disclosure. This content distribution system has a content distribution server 30 and content reproduction terminals 40-1 through 40-n that are connected to the content distribution server 30 via the Internet 20. In what follows, the content reproduction terminals 40-1 through 40-n will be referred to simply as a content reproduction terminal 40 unless otherwise noted.

The content distribution server 30 stores video content taken in an overhead view manner so as to accommodate an entire space of a subject of imaging (a sport event, a concert venue, or the like). This video content was taken by use of one or more video cameras of high resolutions (4000 × 2000 pixels or higher) typified by a super high vision (SHV) camera.

The content distribution server 30 converts the resolution of the stored high-resolution video content into a displayable predetermined resolution (fineness) through the content reproduction terminal 40 and distributes the converted content to the content reproduction terminal 40 via the Internet 20 as a full-image-frame content. At the same time, in response to a request from the content reproduction terminal 40-i on the basis of full-image-frame content, the content distribution server 30 clips a specified image frame out of the stored high-resolution video content and supplies the clipped image frame to the content reproduction terminal 40-i via the Internet 20 as given image frame content.

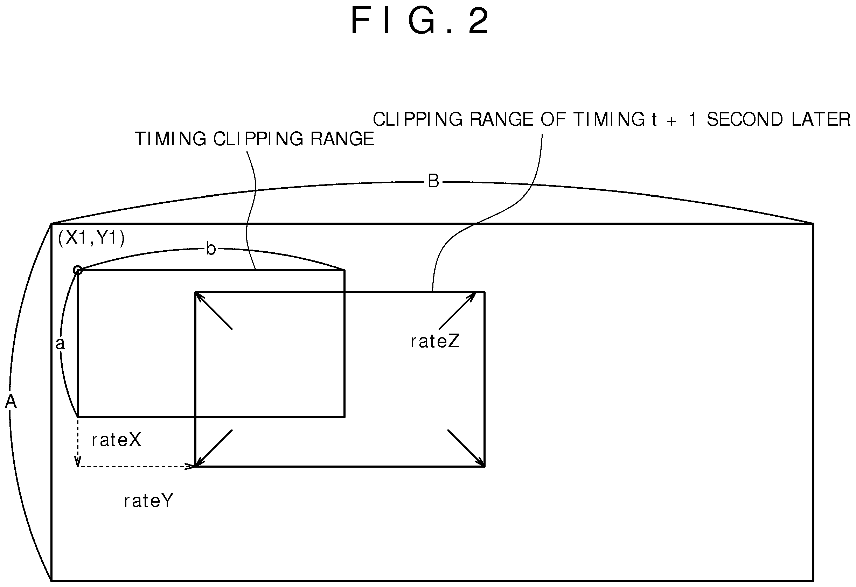

FIG. 2 shows a relation between a high-resolution video content image frame (vertical A × horizontal B) stored in the content distribution server 30 and an image frame (vertical a × horizontal b) of a given image frame content that is clipped from this high-resolution video content and supplied to the content reproduction terminal 40.

In the content reproduction terminal 40, the user can specify a range of attention (hereafter referred to as a clipping range) from full-image-frame video content by executing operations of pan (horizontal movement), tilt (vertical movement), and zoom (zoom-in/zoom-out) as required.

If a clipping range from full-image-frame video content at given timing t, the image frame information (the upper left coordinate (X1, Y1), vertical length a and horizontal length b of the clipping range) indicative of the clipping range is transmitted to the content distribution server 30 as a request. Further, vertical movement amount rateX per second, horizontal movement amount rateY per second, and zoom-in/zoom-out amount rateZ per second are transmitted to the content distribution server 30 as included in the above-mentioned request on the basis of the clipping range specified in timing t + 1 after one second.

In the content distribution server 30, a start frame of given image frame content is clipped from the stored high-resolution video content on the basis of the upper left coordinate (X1, Y1), vertical length a, and horizontal length b of the clipping range in the image frame information included in the received request and the subsequent frames are clipped on the basis of rateX, rateY, and rateZ. The clipped frames are supplied to the content reproduction terminal 40 as stream data.

### [Exemplary configuration of the content distribution server 30]

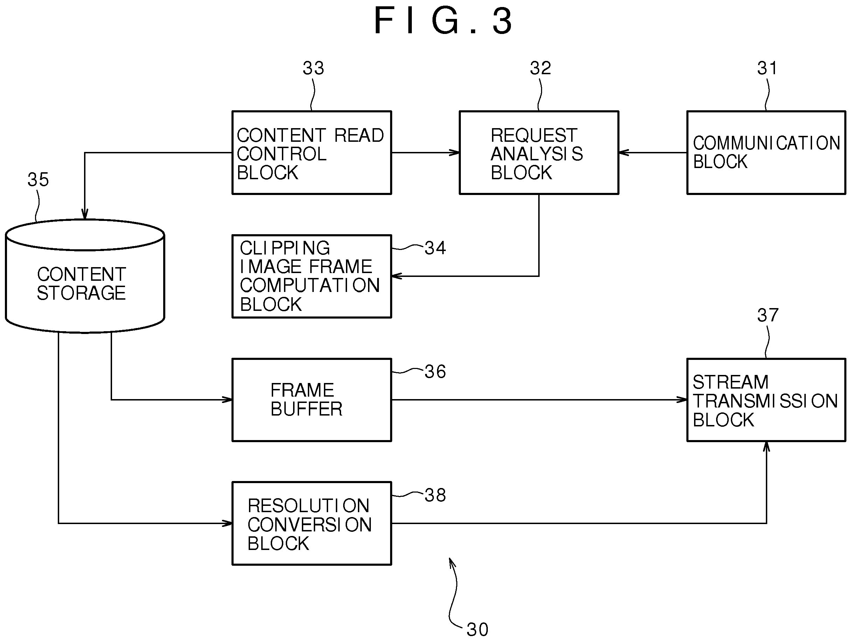

FIG. 3 shows an exemplary configuration of the content distribution server 30. The content distribution server 30 has a communication block 31, a request analysis block 32, a content read control block 33, a clipping image frame computation block 34, a content storage 35, a frame buffer 36, a stream transmission block 37, and a resolution conversion block 38.

The communication block 31 receives a request from the content reproduction terminal 40-i connected thereto via the Internet 20 and outputs the received request to the request analysis block 32. At the same time, the communication block 31 transmits, via the Internet 20, a response to the request generated and supplied by the request analysis block 32 to the content reproduction terminal 40-I that has transmitted the request.

The request analysis block 32 generates a response to a request coming from the content reproduction terminal 40 and supplies the generated response to the communication block 31. At the same time, the request analysis block 32 analyzes a request from the content reproduction terminal 40 and identifies high-resolution video content from which clipping is executed as a result of an analysis result, thereby transmitting the identified content to the content read control block 33. In addition, the request analysis block 32 clips out image frame information (the upper left coordinate (X1, Y1) thereof, vertical length a, horizontal length b, vertical movement amount rateX, horizontal movement amount rateY, and zoom-in/zoom-out amount rateZ) as an analysis result and outputs the obtained image frame information to the clipping image frame computation block 34.

The content read control block 33 controls the content storage 35 to make the content storage 35 output the high-resolution video content stored in the content storage 35 from which clipping is executed to the frame buffer 36.

The clipping image frame computation block 34 computes, on the basis of the image frame information received from the request analysis block 32 as an analysis result, a clipping range from each of the frames of the high-resolution video content from which clipping is executed for each of the frames and transmits the obtained clipping range to the frame buffer 36.

The content storage 35 stores the high-resolution video content.

The frame buffer 36 clips a clipping range for each frame received from the clipping image frame computation block 34 from each frame of the high-resolution video content from which clipping is executed and outputs the obtained clipping range to the stream transmission block 37.

The stream transmission block 37 distributes the full-image frame content received from the resolution conversion block 38 to the content reproduction terminal 40 via the Internet 20 as streaming data. At the same time, the stream transmission block 37 transmits, via the Internet 20, as streaming data, the given image frame content with the clipping range clipped from the high-resolution video content from which the clipping is executed being a frame to the content reproduction terminal 40-i from which the request was transmitted.

The resolution conversion block 38 outputs the high-resolution video content to the stream transmission block 37 from the content storage 35.

### [Exemplary configuration of the content reproduction terminal 40]

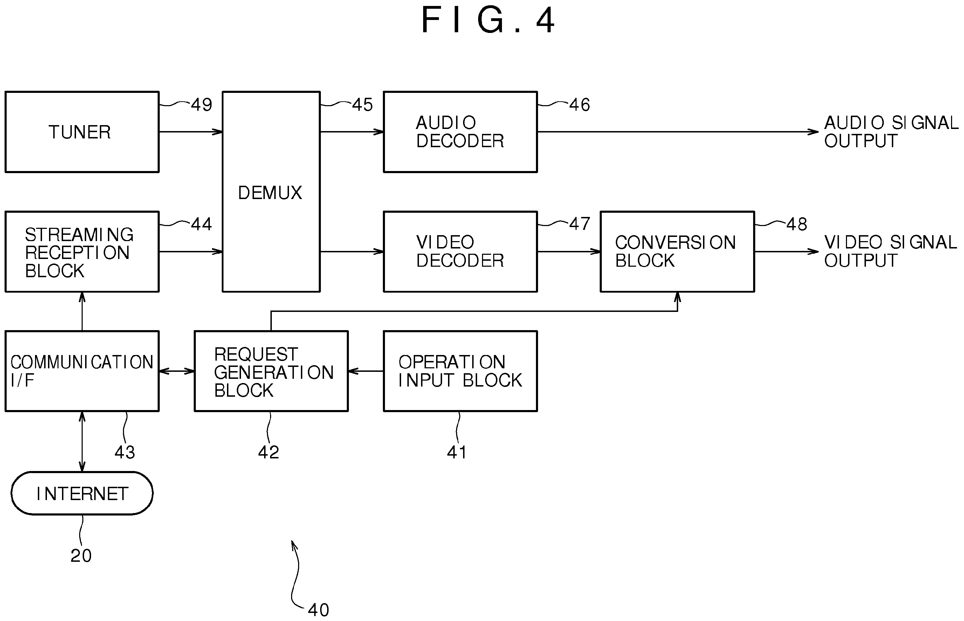

FIG. 4 illustrates an exemplary configuration of the content reproduction terminal 40. The content reproduction terminal 40 has an operation input block 41, a request generation block 42, a communication interface (I/F) 43, a streaming reception block 44, a demultiplex (DEMUX) block 45, an audio decoder 46, a video decoder 47, a conversion block 48, and a tuner 49.

The operation input block 41 is made up of a remote controller and a reception block thereof (both not shown) for example, receives a user operation for specifying the position and size of a clipping range on displayed full-image-frame content, and transmits the these piece of information to the request generation block 42.

On the basis of the clipping range specified through the operation input block 41, the request generation block 42 generates a request that includes image frame information indicative of a clipping range and information for identifying high-resolution video content from which the clipping is executed and transmits the generated request from the communication I/F 43 to the content distribution server 30 via the Internet 20.

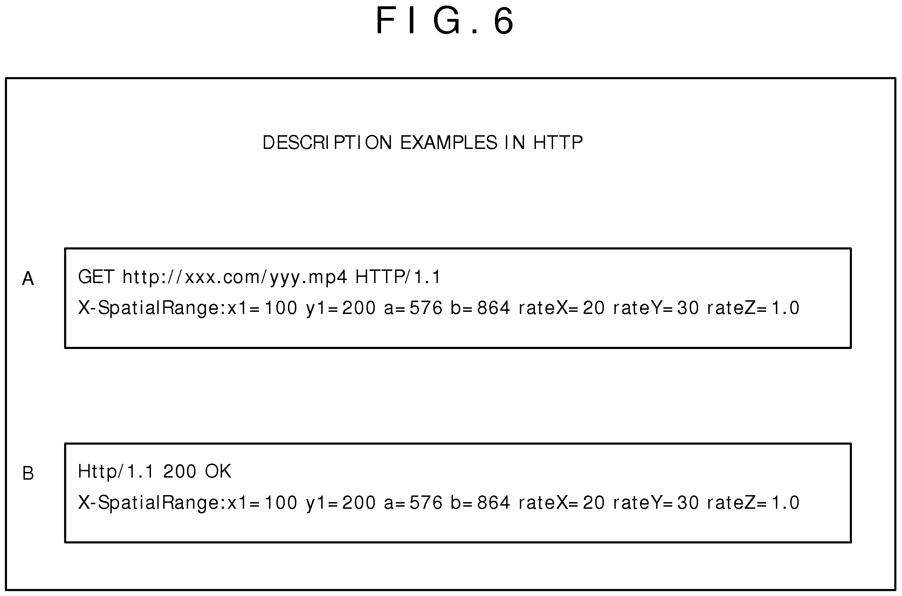

FIG. 6 shows a request generated by the request generation block 42 and an exemplary description of a response to the request on the basis of HTTP by the request analysis block 32.

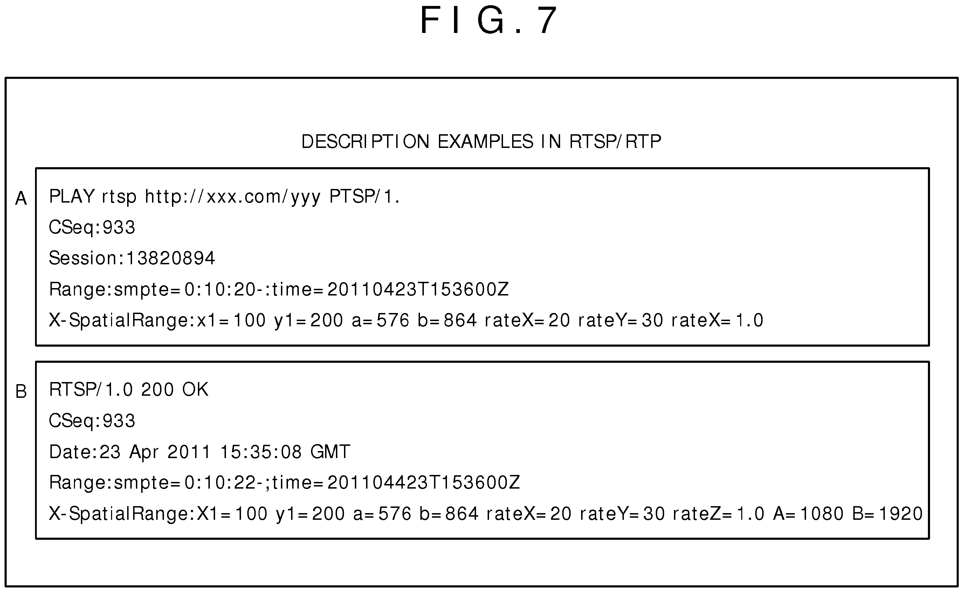

FIG. 7 shows a request generated by the request generation block 42 and an exemplary description of a response to the request on the basis of RTSP/RTP by the request analysis block 32. In the use of RTSP/RTP, a start timing with which to clip a given image frame from high-resolution video content from which the clipping is executed may be specified.

The communication I/F 43 is connected to the content distribution server 30 via the Internet 20.

The streaming reception block 44 receives the full-image-frame content distributed from the content distribution server 30 in a streaming manner via the Internet 20 and the communication I/F 43 and outputs the received full-image-frame content to the demultiplex block 45. At the same time, the streaming reception block 44 receives the given-image-frame content transmitted from the content distribution server 30 in a streaming manner via the Internet 20 and the communication I/F 43 and outputs the received given-image-frame content to the demultiplex block 45.

The demultiplex block 45 separates audio encoded data and video encoded data from the full-image-frame content or the given-image-frame content received from the streaming reception block 44 or from the broadcast content received from the tuner 49. The demultiplex block 45 outputs the separated audio encoded data to the audio decoder 46 and the separated video encoded data to the video decoder 47.

The audio decoder 46 decodes the received audio encoded data and outputs a resultant audio signal to a monitor (not shown) on the subsequent stage. The video decoder 47 decodes the received video encoded data and outputs a resultant video signal to the conversion block 48. The conversion block 28 converts the resolution and the aspect ratio of the received video signal such that the monitor of the subsequent stage can display the video signal and outputs the converted video signal to the monitor.

For example, if the displayable resolution of the monitor of the subsequent stage is vertical v × horizontal h, then the conversion block 48 converts given-image-frame content of vertical a × horizontal b into vertical v × horizontal h.

The tuner 49 receives broadcast content that is a television program and outputs the received broadcast content to the demultiplex block 45. It should be noted that the full-image-frame for the high-resolution video content from which given-image-frame content is clipped may be broadcast as broadcast content.

It should be noted that the content reproduction terminal 40 may either be a standalone unit or a unit incorporated in a television receiver or a video recorder, for example.

### [Description of operations]

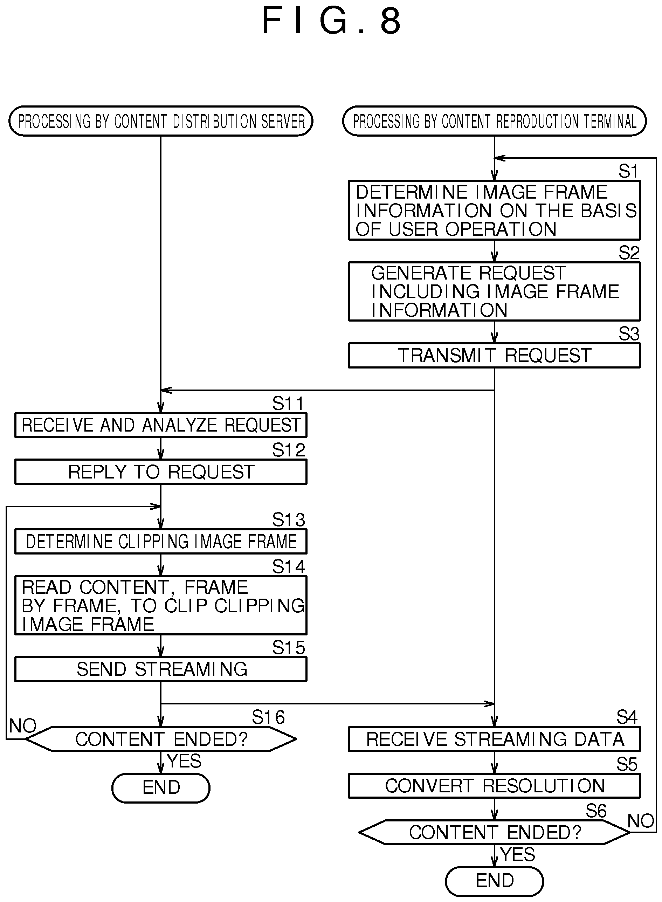

FIG. 8 shows a flowchart indicative of operations of a content distribution system 10.

It should be noted that the following description is done on the supposition that full-image-frame content have already distributed from the content distribution system 10 and the content reproduction terminal 40-i is reproducing the received full-image-frame content.

In the content reproduction terminal 40-i, if the user specifies the position and size of a clipping range on full-image-frame content through the operation input block 41 in step S1, then the specification is transmitted to the request generation block 42. In step S2, on the basis of a clipping range specified through the operation input block 41, the request generation block 42 generates a request including image frame information indicative of a clipping range and the information for identifying high-resolution video content from which the clipping is executed. In step S3, the request generation block 42 transmits the generated request from the communication I/F 43 to the content distribution server 30 via the Internet 20.

On the other hand, in the content distribution server 30, the communication block 31 receives the request transmitted from the content reproduction terminal 40 via the Internet 20 in step S11 and outputs the received request to the request analysis block 32. The request analysis block 32 analyzes the request received from the content reproduction terminal 40 to identify the high-resolution video content from which the clipping is executed and transmits the identified high-resolution video content to the content read control block 33 as an analysis result. In step S12, the request analysis block 32 generates a response to the request from the content reproduction terminal 40 and supplies the generated response to the communication block 31. The communication block 31 transmits this response to the requesting content reproduction terminal 40-i via the Internet 20. In step S13, on the basis of the image frame information received from the request analysis block 32 as an analysis result, the clipping image frame computation block 34 computes, for each of the frames of the high-resolution video content from which the clipping is executed, a clipping range from each these frames and transmits the computed clipping range to the frame buffer 36.

To be more specific, for the first frame, an area having a diagonal defined by the upper left coordinate (X1, Y1) and the lower right coordinate (X1+a, Y1+b) provides a clipping area. For each of the second and subsequent frames k, if the frame rate is 30 frames/second, an area having a diagonal defined by upper left coordinate (X1+rateX/30, Y1+rateY/30) and lower right coordinate (X1+rateX/30+a- rateZ/30, Y1+rateY/30+b- rateZ/30) provides a clipping area.

In step S14, under the control of the content read control block 33, the content storage 35 outputs the high-resolution video content stored therein to the frame buffer 36. From each frame of the high-resolution video content from which the clipping is executed, the frame buffer 36 clips a clipping range for each frame transmitted from the clipping image frame computation block 34 and outputs the clipped clipping range to the stream transmission block 37.

In step S15, the stream transmission block 37 given-image-frame content having the clipping range clipped from the high-resolution video content from which the clipping is executed to the content reproduction terminal 40-i via the Internet 20 as streaming data. It should be noted that the processing operations of steps S13 through S15 are repeated until the content is ended.

In the content reproduction terminal 40, in step S4, the streaming reception block 44 receives the given-image-frame content transmitted from the content distribution server 30 in a streaming manner via the Internet 20 and the communication I/F 43 and outputs the received given-image-frame content to the demultiplex block 45. The demultiplex block 45 separates audio encoded data and video encoded data from the given-image-frame content and outputs the audio encoded data to the audio decoder 46 and the video encoded data to the video decoder 47. The audio decoder 46 decodes the received audio encoded data and outputs a resultant audio signal to the monitor (not shown) of the subsequent stage. The video decoder 47 decodes the received video encoded data and outputs a resultant video signal to the conversion block 48.

In step S5, the conversion block 28 converts the resolution and aspect ratio of the video signal received from the video decoder 47 such that this video signal becomes displayable on the monitor of the subsequent stage and outputs the resultant signal to the subsequent stage. Then, by the continuation of image frame clipping operations by the user, the processing operations of steps S1 through S5 are repeated until the content is ended.

The content distribution system 10 operates as described above. As described, the content distribution system 10 allows the user of the content reproduction terminal 40 to specify a given range of full-image-frame content as a clipping range and view given-image frame content made up of the clipping range transmitted from the content distribution server 30.

It should be noted that transmitting image frame information to the content distribution server 30 every several seconds allows the user of the content reproduction terminal 40 to always view the given-image-frame content desired by the user.

Consequently, the user of the content reproduction terminal 40 can view a football game with particular players focused by panning, tilting, or zooming the full-image-frame content of that football game through a remote controller, for example.

It should be noted that full-image-frame content and given-image-frame content may be simultaneously displayed on the screen of the content reproduction terminal 40.

It should also be noted that the above-mentioned sequence of processing operations may be executed by software as well as hardware. If the above-mentioned sequence of processing operations is executed by software, the programs constituting the software are installed in a computer which is built in dedicated hardware equipment or installed, from a program recording media, into a general-purpose personal computer for example in which various programs may be installed for the execution of various functions.

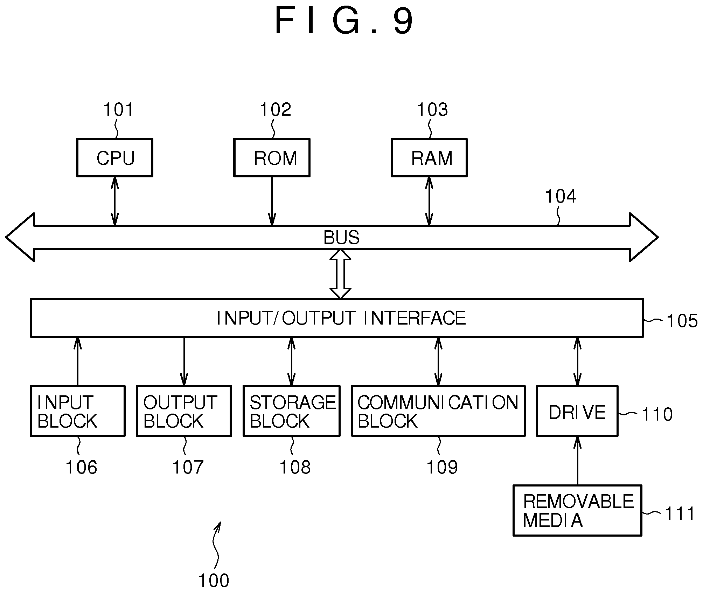

FIG. 9 is a block diagram illustrating an exemplary hardware configuration of a computer that executes the above-mentioned sequence of operations by program.

In a computer 100, a CPU (Central Processing Unit) 101, a ROM (Read Only Memory) 102, and a RAM (Random Access Memory) 103 are interconnected by a bus 104.

The bus 104 is connected with an input/output interface 105. The input/output interface 105 is connected with an input block 106 made up of a keyboard, a mouse, and a microphone, for example, an output block 107 made up of a display and a speaker, for example, a storage block 108 made up of a hard disk unit or a nonvolatile memory, for example, a communication block 109 made up of a network interface for example, and a drive 110 for driving a removable media 111 such as a magnetic disk, an optical disk or a semiconductor memory, for example.

The above-mentioned sequence of processing operations are executed when the CPU 101 loads a program from the recording block 108 for example into the RAM 103 through the input/output interface 105 and the bus 104 and executes the loaded program in the computer 100.

It should be noted that the programs to be executed by the computer 100 may be a program that is executed in a time-dependent manner in the sequences described in this specification, or may be a program that is executed in parallel or on an on-demand basis.

It should also be noted that each program may be executed by a single unit of computer or two or more units of computers in a distributed manner. Further, programs may be transferred to a remote computer for execution.

It should be noted that a "system" as used herein denotes an entire collection of two or more component elements.

It is to be understood that the embodiments of the present invention is not limited to the above-mentioned embodiments, and changes and variations may be made without departing from the scope of the following claims.

### [Reference Signs List]

10 : Content distribution system
30 : Content distribution server
40 : Content reproduction terminal
31 : Communication block
32 : Request analysis block
33 : Content read control block
34 : Clipping image frame computation block
35 : Content storage
36 : Frame buffer
37 : Stream transmission block
38 : Resolution conversion block
40 : Content reproduction terminal
41 : Operation input block
42 : Request generation block
43 : Communication I/F
44 : Streaming reception block
45 : Demultiplex block
46 : Audio decoder
47 : Video decoder
48 : Conversion block
49 : Tuner

## Claims

1. A content transmission apparatus (10) comprising:
a hold block (35) configured to hold high-resolution video content;
a reception block (31) configured to receive image frame information transmitted from a content reproduction apparatus;
a computation block (34) configured to compute a clipping range on the basis of said received image frame information;
a clip block (36) configured to clip said computed clipping range from said held high-resolution video content; and
a transmission block (37) configured to transmit given-image-frame content comprising a clipping result to said content reproduction apparatus,
wherein said computation block is configured to compute a clipping range for each high-resolution content frame on the basis of said image frame information, and
wherein said clip block is configured to clip, from each high-resolution content frame of said held high-resolution video content, said clipping range computed for each high-resolution content frame,
**characterized in that** said image frame information includes an initial position of said clipping range, a movement amount per unit time and a zoom-in/zoom-out amount per unit time of said clipping range.

2. The content transmission apparatus according to claim 1, further comprising:
a conversion block (38) configured to convert a resolution of said held high-resolution video content to generate full-image-frame content,
said transmission block (37) distributing said generated full-image-frame content.

3. The content transmission apparatus according to claim 1 or 2, wherein the high-resolution video content is being taken in an overhead view manner so as to accommodate an entire space of a subject of imaging in a high-resolution by use of a plurality of high resolution video cameras.

4. The content transmission apparatus according to any one of claims 1 to 3, wherein said reception block (31) is configured to receive said image frame information continuously.

5. A content transmission method of a content transmission apparatus, the method comprising:
a receiving step (S12) of receiving image frame information transmitted from a content reproduction apparatus;
a computing step (S13) of computing a clipping range on the basis of said received image frame information;
a clipping step (S14) of clipping said computed clipping range from held high-resolution video content; and
a transmitting step (S15) of transmitting given-image-frame content comprising a clipping result to said content reproduction apparatus,
wherein the computing step includes computing a clipping range for each high-resolution content frame on the basis of said received image frame information, and the clipping step includes clipping said computed clipping range for each high-resolution content frame from each high-resolution content frame,
**characterized in that** said image frame information includes an initial position of said clipping range, a movement amount per unit time and a zoom-in/zoom-out amount per unit time of said clipping range.

6. A content reproduction apparatus (40) comprising:
a user operation input block (41) configured to capture an operation specifying a given clipping range on a screen of video content;
a generation block (42) configured to generate image frame information on the basis of said inputted operation;
a transmission block (43) configured to transmit said generated image frame information to a content transmission apparatus; and
a reception block (44) configured to receive given-image-frame content with said clipping range, clipped from said video content, said given-image-frame content being transmitted from said content transmission apparatus in response to said transmitted image frame information,
**characterized in that** said image frame information includes an initial position of said clipping range, a movement amount per unit time and a zoom-in/zoom-out amount per unit time of said clipping range.

7. The content reproduction apparatus according to claim 6, further comprising:
a conversion block (48) configured to convert a resolution of said received given-image-frame content, to a displayable resolution of a monitor attached to the content reproduction apparatus, such that the monitor can display the given-image-frame content.

8. The content reproduction apparatus according to claims 6 or 7, wherein said transmission block (43) is configured to transmit said image frame information continuously.

9. A content reproduction method of a content reproduction apparatus, the method comprising:
a user operation inputting step (S1) of capturing an operation for specifying a given clipping range on a screen of video content;
a generating step (S2) of generating image frame information on the basis of said inputted operation;
a transmitting step of transmitting said generated image frame information to a content transmission apparatus; and
a receiving step (S4) of receiving given-image-frame content with said clipping range, clipped from said video content, said given-image-frame content being transmitted from said content transmission apparatus in response to said transmitted image frame information,
**characterized in that** said image frame information includes an initial position of said clipping range, a movement amount per unit time and a zoom-in/zoom-out amount per unit time of said clipping range.

10. The content reproduction method according to claim 9, further comprising:
converting, by a conversion block (48), a resolution of said received given-image-frame content, to a displayable resolution of a monitor attached to the content reproduction apparatus, such that the monitor can display the given-image-frame content.

11. The content reproduction method according to claim 9 or 10, further comprising:
transmitting, by a transmission block (43), said image frame information continuously.

12. The content reproduction apparatus according to any one of claims 6 to 8 or the content reproduction method according to any one of claims 9 to 11, wherein the high-resolution video content is being taken in an overhead view manner so as to accommodate an entire space of a subject of imaging in a high-resolution.

13. A program for causing a computer to perform the steps of the content transmission method according to claim 5 or the content reproduction method according to any one of claims 9 to 12.

14. Television receiver including a content reproduction apparatus according to any of claims 6 to 8 or 12.

15. Video recorder including a content reproduction apparatus according to any of claims 6 to 8 or 12.

## Patentansprüche

1. Eine Vorrichtung zur Übertragung von Inhalten (10), umfassend:
einen Halteblock (35), der zum Halten eines hochauflösenden Videoinhalts eingerichtet ist;
einen Empfangsblock (31), der so eingerichtet ist, Bildrahmeninformationen zu empfangen, die von einer Vorrichtung zur Wiedergabe von Inhalten übertragen werden;
einen Berechnungsblock (34), der eingerichtet ist, einen Beschneidungsbereich basierend auf den empfangenen Bildrahmeninformationen zu berechnen;
einen Clip-Block (36), der so eingerichtet ist, den berechneten Beschneidungsbereich von dem gehaltenen hochauflösenden Videoinhalt abzuschneiden; und
einen Übertragungsblock (37), der so eingerichtet ist, einen gegebenen Bildrahmeninhalt, der ein Ergebnis der Beschneidung umfasst, an die Vorrichtung zur Wiedergabe von Inhalten zu übertragen,
wobei der Berechnungsblock so eingerichtet ist, einen Beschneidungsbereich für jeden hochauflösenden Inhaltsrahmen basierend auf der Bildrahmeninformation zu berechnen, und
wobei der Clip-Block so eingerichtet ist, von jedem hochauflösenden Inhaltsrahmen des gehaltenen hochauflösenden Videoinhalts den für jeden hochauflösenden Inhaltsrahmen berechneten Clipping-Bereich abzuschneiden,
**dadurch gekennzeichnet, dass** die Bildrahmeninformation eine Anfangsposition des Beschneidungsbereichs, einen Bewegungsbetrag pro Zeiteinheit und einen Vergrößerungs-/Verkleinerungsbetrag pro Zeiteinheit des Beschneidungsbereichs umfasst.

2. Die Vorrichtung zur Übertragung von Inhalten nach Anspruch 1, ferner umfassend:
einen Konvertierungsblock (38), der so eingerichtet ist, eine Auflösung des gehaltenen hochauflösenden Videoinhalts zu konvertieren, um einen Vollbildrahmeninhalt zu erzeugen,
wobei der Übertragungsblock (37), den erzeugten Vollbildrahmeninhalt verteilt.

3. Die Vorrichtung zur Übertragung von Inhalten nach Anspruch 1 oder 2, bei der der hochauflösende Videoinhalt in einer Overhead-Art und Weise aufgenommen wird, um einen gesamten Raum eines bildgebenden Objektes in einer hohen Auflösung unter Verwendung einer Vielzahl von hochauflösenden Videokameras unterzubringen.

4. Die Vorrichtung zur Übertragung von Inhalten nach einem der Ansprüche 1 bis 3, wobei der Empfangsblock (31) so eingerichtet ist, die Bildrahmeninformationen kontinuierlich zu empfangen.

5. Ein Verfahren zur Übertragung von Inhalten einer Vorrichtung zur Übertragung von Inhalten, wobei das Verfahren umfasst:
einen Empfangsschritt (S12) zum Empfangen von Bildrahmeninformationen, die von einer Vorrichtung zur Wiedergabe von Inhalten übertragen werden;
einen Rechenschritt (S13) zur Berechnung eines Beschneidungsbereichs basierend auf den empfangenen Bildrahmeninformationen;
einen Schritt (S14) zum Beschneiden des berechneten Beschneidebereichs von gehaltenem hochauflösendem Videoinhalt; und
einen Übertragungsschritt (S15) zum Übertragen eines gegebenen Bildrahmeninhalts, der ein Ergebnis der Beschneidung umfasst, an die Vorrichtung zur Wiedergabe von Inhalten,
wobei der Berechnungsschritt das Berechnen eines Beschneidungsbereichs für jeden hochauflösenden Inhaltsrahmen basierend auf den empfangenen Bildrahmeninformationen umfasst und der Schritt des Beschneidens das Beschneiden des berechneten Beschneidungsbereichs für jeden hochauflösenden Inhaltsrahmen aus jedem hochauflösenden Inhaltsrahmen umfasst,
**dadurch gekennzeichnet, dass** die Bildrahmeninformation eine Anfangsposition des Beschneidungsbereichs, einen Bewegungsbetrag pro Zeiteinheit und einen Vergrößerungs-/Verkleinerungsbetrag pro Zeiteinheit des Beschneidungsbereichs umfasst.

6. Eine Vorrichtung zur Wiedergabe von Inhalten (40), umfassend:
einen Eingangsblock für Benutzereingaben (41), der so eingerichtet ist, eine Benutzereingabe aufzunehmen, die einen bestimmten Beschneidungsbereich auf einem Bildschirm mit Videoinhalt angibt;
einen Erzeugungsblock (42), der so eingerichtet ist, Bildrahmeninformationen basierend auf der Benutzereingabe zu erzeugen;
einen Übertragungsblock (43), der so eingerichtet ist, die erzeugten Bildrahmeninformationen an eine Vorrichtung zur Übertragung von Inhalten zu übertragen; und
einen Empfangsblock (44), der so eingerichtet ist, einen gegebenen Bildrahmeninhalt mit dem Beschneidungsbereich zu empfangen, der aus dem Videoinhalt ausgeschnitten ist, wobei der gegebene Bildrahmeninhalt von der Vorrichtung zur Übertragung von Inhalten als Reaktion auf die übertragenen Bildrahmeninformationen übertragen wird,
**dadurch gekennzeichnet, dass** die Bildrahmeninformation eine Anfangsposition des Beschneidungsbereichs, einen Bewegungsbetrag pro Zeiteinheit und einen Vergrößerungs-/Verkleinerungsbetrag pro Zeiteinheit des Beschneidungsbereichs umfasst.

7. Die Vorrichtung zur Wiedergabe von Inhalten nach Anspruch 6, ferner umfassend:
einen Konvertierungsblock (48), der so eingerichtet ist, eine Auflösung des empfangenen gegebenen Bildrahmeninhalts in eine anzeigbare Auflösung eines an die Vorrichtung zur Wiedergabe von Inhalten angeschlossenen Monitors zu konvertieren, so dass der Monitor den gegebenen Bildrahmeninhalt anzeigen kann.

8. Die Vorrichtung zur Wiedergabe von Inhalten nach Anspruch 6 oder 7, wobei der Übertragungsblock (43) so eingerichtet ist, die Bildrahmeninformationen kontinuierlich zu übertragen.

9. Ein Verfahren zur Wiedergabe von Inhalten einer Vorrichtung zur Wiedergabe von Inhalten, wobei das Verfahren umfasst:
einen Eingabeschritt (S1) zur Erfassung einer Benutzereingabe zur Angabe eines bestimmten Beschneidungsbereich auf einem Bildschirm mit Videoinhalt;
einen Erzeugungsschritt (S2) zur Erzeugung von Bildrahmeninformationen basierend auf der Benutzereingabe;
einen Übertragungsschritt zum Übertragen der erzeugten Bildrahmeninformationen an eine Vorrichtung zur Übertragung von Inhalten; und
einen Empfangsschritt (S4) des Empfangens eines gegebenen Bildrahmeninhalts mit dem Beschneidungsbereich, der aus dem Videoinhalt ausgeschnitten wurde, wobei der gegebene Bildrahmeninhalt von der Vorrichtung zur Übertragung von Inhalten als Reaktion auf die übertragenen Bildrahmeninformationen übertragen wird,
**dadurch gekennzeichnet, dass** die Bildrahmeninformation eine Anfangsposition des Beschneidungsbereichs, einen Bewegungsbetrag pro Zeiteinheit und einen Vergrößerungs-/Verkleinerungsbetrag pro Zeiteinheit des Beschneidungsbereichs umfasst.

10. Das Verfahren zur Wiedergabe von Inhalten nach Anspruch 9, ferner umfassend:
Konvertieren einer Auflösung des empfangenen Bildrahmeninhalts in eine anzeigbare Auflösung eines an die Vorrichtung zur Wiedergabe von Inhalten angeschlossenen Monitors durch einen Umwandlungsblock (48), so dass der Monitor den gegebenen Bildrahmeninhalt anzeigen kann.

11. Das Verfahren zur Wiedergabe von Inhalten nach Anspruch 9 oder 10, ferner umfassend:
kontinuierliches Übertragen der Bildrahmeninformationen durch einen Übertragungsblock (43).

12. Die Vorrichtung zur Wiedergabe von Inhalten nach einem der Ansprüche 6 bis 8 oder das Verfahren zur Wiedergabe von Inhalten nach einem der Ansprüche 9 bis 11, wobei der hochauflösende Videoinhalt in einer Overhead-Art und Weise aufgenommen wird, um einen ganzen Raum eines Objekts in einer hohen Auflösung aufzunehmen.

13. Ein Programm, das einen Computer veranlasst, die Schritte des Verfahrens zur Übertragung von Inhalten nach Anspruch 5 oder des Verfahren zur Wiedergabe von Inhalten nach einem der Ansprüche 9 bis 12 durchzuführen.

14. Fernsehempfänger einschließlich einer Vorrichtung zur Wiedergabe von Inhalten gemäß einem der Ansprüche 6 bis 8 oder 12.

15. Videorecorder einschließlich einer Vorrichtung zur Wiedergabe von Inhalten nach einem der Ansprüche 6 bis 8 oder 12.

## Revendications

1. Appareil de transmission de contenu (10) comprenant :
un bloc de conservation (35) configuré pour conserver un contenu vidéo à haute résolution ;
un bloc de réception (31) configuré pour recevoir des informations de trame d'image transmises à partir d'un appareil de reproduction de contenu ;
un bloc de calcul (34) configuré pour calculer une plage de coupe sur la base desdites informations de trame d'image reçues ;
un bloc de coupe (36) configuré pour couper ladite plage de coupe calculée à partir dudit contenu vidéo à haute résolution conservé ; et
un bloc de transmission (37) configuré pour transmettre un contenu de trame d'image donnée comprenant un résultat de coupe au dit appareil de reproduction de contenu,
dans lequel ledit bloc de calcul est configuré pour calculer une plage de coupe pour chaque trame de contenu à haute résolution sur la base desdites informations de trame d'image, et
dans lequel ledit bloc de coupe est configuré pour couper, à partir de chaque trame de contenu à haute résolution dudit contenu vidéo à haute résolution, ladite plage de coupe calculée pour chaque trame de contenu à haute résolution,
**caractérisé en ce que** lesdites informations de trame d'image comportent une position initiale de ladite plage de coupe, une quantité de mouvement par unité de temps et une quantité de zoom avant/zoom arrière par unité de temps de ladite plage de coupe.

2. Appareil de transmission de contenu selon la revendication 1, comprenant en outre :
un bloc de conversion (38) configuré pour convertir une résolution dudit contenu vidéo à haute résolution conservé pour générer un contenu de trame d'image complète,
ledit bloc de transmission (37) distribuant ledit contenu de trame d'image complète.

3. Appareil de transmission de contenu selon la revendication 1 ou 2, dans lequel le contenu vidéo à haute résolution est pris selon une vue aérienne de sorte à contenir un espace entier d'un sujet d'imagerie à une haute résolution par l'utilisation d'une pluralité de caméras vidéo haute résolution.

4. Appareil de transmission de contenu selon l'une quelconque des revendications 1 à 3, dans lequel ledit bloc de réception (31) est configuré pour recevoir lesdites informations de trame d'image en continu.

5. Procédé de transmission de contenu d'un appareil de transmission de contenu, le procédé comprenant :
une étape de réception (S12) consistant à recevoir des informations de trame d'image transmises à partir d'un appareil de reproduction de contenu ;
une étape de calcul (S13) consistant à calculer une plage de coupe sur la base desdites informations de trame d'image reçues ;
une étape de coupe (S14) consistant à couper ladite plage de coupe calculée à partir d'un contenu vidéo à haute résolution conservé ; et
une étape de transmission (S15) consistant à transmettre un contenu de trame d'image donnée comprenant un résultat de coupe au dit appareil de reproduction de contenu,
dans lequel l'étape de calcul consiste à calculer une plage de coupe pour chaque trame de contenu à haute résolution sur la base desdites informations de trame d'image reçues et l'étape de coupe consiste à couper ladite plage de coupe calculée pour chaque trame de contenu à haute résolution à partir de chaque trame de contenu à haute résolution,
**caractérisé en ce que** lesdites informations de trame d'image comportent une position initiale de ladite plage de coupe, une quantité de mouvement par unité de temps et une quantité de zoom avant/zoom arrière par unité de temps de ladite plage de coupe.

6. Appareil de reproduction de contenu (40) comprenant :
un bloc d'entrée d'opération par utilisateur (41) configuré pour capturer une opération spécifiant une plage de coupe donnée sur un écran d'un contenu vidéo ;
un bloc de génération (42) configuré pour générer des informations de trame d'image sur la base de ladite opération entrée ;
un bloc de transmission (43) configuré pour transmettre lesdites informations de trame d'image générées à un appareil de transmission de contenu ; et
un bloc de réception (44) configuré pour recevoir un contenu de trame d'image donnée ayant ladite plage de coupe, coupée dudit contenu vidéo, ledit contenu de trame d'image donnée étant transmis à partir dudit appareil de transmission de contenu en réponse auxdites informations de trame d'image transmises,
**caractérisé en ce que** lesdites informations de trame d'image comportent une position initiale de ladite plage de coupe, une quantité de mouvement par unité de temps et une quantité de zoom avant/zoom arrière par unité de temps de ladite plage de coupe.

7. Appareil de reproduction de contenu selon la revendication 6, comprenant en outre :
un bloc de conversion (48) configuré pour convertir une résolution dudit contenu de trame d'image donnée reçu en une résolution pouvant être affichée d'un moniteur fixé à l'appareil de reproduction de contenu de telle sorte que le moniteur puisse afficher le contenu de trame d'image donnée.

8. Appareil de reproduction de contenu selon les revendications 6 ou 7, dans lequel ledit bloc de transmission (43) est configuré pour transmettre lesdites informations de trame d'image en continu.

9. Procédé de reproduction de contenu d'un appareil de reproduction de contenu, le procédé comprenant :
une étape d'entrée d'opération par utilisateur (S1) consistant à capturer une opération pour spécifier une plage de coupe donnée sur un écran d'un contenu vidéo ;
une étape de génération (S2) consistant à générer des informations de trame d'image sur la base de ladite opération entrée ;
une étape de transmission consistant à transmettre lesdites informations de trame d'image générées à un appareil de transmission de contenu ; et
une étape de réception (S4) consistant à recevoir un contenu de trame d'image donnée ayant ladite plage de coupe, coupée dudit contenu vidéo, ledit contenu de trame d'image donnée étant transmis à partir dudit appareil de transmission de contenu en réponse auxdites informations de trame d'image transmises,
**caractérisé en ce que** lesdites informations de trame d'image comportent une position initiale de ladite plage de coupe, une quantité de mouvement par unité de temps et une quantité de zoom avant/zoom arrière par unité de temps de ladite plage de coupe.

10. Procédé de reproduction de contenu selon la revendication 9, comprenant en outre:
la conversion, par un bloc de conversion (48), d'une résolution dudit contenu de trame d'image donnée, à une résolution affichable d'un moniteur fixé à l'appareil de reproduction de contenu, de sorte que le moniteur peut afficher le contenu de trame d'image donnée.

11. Procédé de reproduction de contenu selon la revendication 9 ou 10, comprenant en outre :
la transmission, par un bloc de transmission (43), de ladite information de trame d'image de manière continue.

12. Appareil de reproduction de contenu selon l'une quelconque des revendications 6 à 8 ou procédé de reproduction de contenu selon l'une quelconque des revendications 9 à 11, dans lequel (lesquels) le contenu vidéo à haute résolution est pris selon une vue aérienne de sorte à contenir un espace entier d'un sujet d'imagerie à une haute résolution.

13. Programme pour contraindre un ordinateur à réaliser les étapes du procédé de transmission de contenu selon la revendication 5 ou du procédé de reproduction de contenu selon l'une quelconque des revendications 9 à 12.

14. Poste de télévision comprenant un appareil de reproduction de contenu selon l'une quelconque des revendications 6 à 8 ou 12.

15. Enregistreur vidéo comprenant un appareil de reproduction de contenu selon l'une quelconque des revendications 6 à 8 ou 12.
